Europäisches Patentamt

European Patent Office

Office européen des brevets

(19)

(11) Veröffentlichungsnummer: **0 227 998 B1**

(12) # EUROPÄISCHE PATENTSCHRIFT

(45) Veröffentlichungstag der Patentschrift: **17.04.91**

(51) Int. Cl.⁵: **B07C 1/02, G06K 13/067**

(21) Anmeldenummer: **86117241.9**

(22) Anmeldetag: **10.12.86**

(54) **Verfahren zum Steuern des Abzugsvorganges bei einer Vereinzelungseinrichtung und Anordnung zur Durchführung des Verfahrens.**

(30) Priorität: **13.12.85 DE 3544093**

(43) Veröffentlichungstag der Anmeldung:
**08.07.87 Patentblatt 87/28**

(45) Bekanntmachung des Hinweises auf die
Patenterteilung:
**17.04.91 Patentblatt 91/16**

(84) Benannte Vertragsstaaten:
**DE FR GB IT**

(56) Entgegenhaltungen:
EP-A- 0 167 091    DE-A- 1 406 112
DE-A- 2 419 630    DE-A- 2 431 327
DE-A- 2 613 261    DE-A- 2 758 007
DE-B- 1 187 051    US-A- 3 436 968
US-A- 3 558 860    US-A- 3 781 652
US-A- 3 955 812    US-A- 4 121 716

(73) Patentinhaber: **Licentia Patent-
Verwaltungs-GmbH
Theodor-Stern-Kai 1
W-6000 Frankfurt/Main 70(DE)**

(72) Erfinder: **Goldkuhle, Gerhard, Ing. grad.
Mondrauteweg 6
W-7750 Konstanz(DE)**

(74) Vertreter: **Schulze, Harald Rudolf, Dipl.-Ing. et
al
Licentia Patent-Verwaltungs-GmbH Theodor-
Stern-Kai 1
W-6000 Frankfurt/Main 70(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren und eine Anordnung zur Durchführung des Verfahrens gattungsgemäß dem Oberbegriff des Patentanspruchs 1.

Der Erfindung liegt die Aufgabe zugrunde, den Stand der Technik zu verbessern und insbesondere ein Verfahren und eine Anordnung zu finden für eine Abzugseinrichtung zur aufeinanderfolgenden Abgabe von vereinzelten Sendungen, beispielsweise Briefe, Postkarten u.ä., die in ihren Längen, Höhen, Dicken, Gewichten und Steifigkeiten unterschiedlich sind, aus beispielsweise einem Stapel in eine Förderstrecke, um einen möglichst großen Durchsatz zu erzielen, d.h. eine möglichst große Anzahl innerhalb eines vorgegebenen Zeitintervalls von vereinzelten Briefen aus einer Abzugseinrichtung in eine Förderstrecke zu transportieren.
Bei einer nachgeschalteten Verteilanlage sollte hiermit ein störungsfreier Dauerbetrieb gewährleistet sein. Daraus ergibt sich, daß die vereinzelten aufeinanderfolgenden Sendungen in optimierten minimalen Abständen zueinander über eine Förderstrecke der nachgeschalteten Verteilanlage so angeboten werden, daß eine zeitrichtige Steuerung der Richtungsweichen der Verteilanlage und ein störungsfreies Einstapeln der Briefsendungen in die Stapelfächer gewährleistet sind.

Diese Aufgabe wird durch die kennzeichnenden Verfahrensschritte und Merkmale der Ansprüche 1 und 2 in vorteilhafter Weise gelöst. Weitere vorteilhafte Ausgestaltungen und Weiterbildungen sind den Unteransprüchen zu entnehmen und anhand von Abbildungen in der Beschreibung näher ausgeführt.

Die in den Ansprüchen erwähnten Sendungen sind flache Gegenstände, deren Längenausdehnungen im Vergleich zu ihren Dicken groß sind, wie z.B. Briefe, Postkarten und ähnliches.

Die Erfindung wird an einem Ausführungsbeispiel näher erläutert. In der zugehörigen Zeichnung zeigen:

FIG. 1:      Prinzipielle Darstellung der Steuerung einer Vereinzelungseinrichtung;

FIG. 2:      Schematische Darstellung der Meßeinrichtung und der gesteuerten Vereinzelungseinrichtung;

FIG. 3A:     Signalaufbereitungseinrichtuhg für Längenmessung und Abstandssteuerung;

3B:      Höhenmessung;

3C:      Dickenmessung;

FIG. 4:      Steuerungslogik;

FIG. 5:      Schaltungsanordnung einer Abzugssteuerung;

FIG. 6A:     Gesamtdarstellung einer Vereinzelungseinrichtung mit Zielerkennungseinrichtung und Verteilanlage;

6B:      Bar-Code-Leser.

Bei einer Vereinzelungseinrichtung, wie sie beispielsweise in der Patentschrift DE-C 27 58 007 beschrieben ist, werden Sendungen, beispielsweise Briefe, aus einem Stapel in eine Abzugseinrichtung gebracht, von dort vereinzelt abgegeben und mittels einer mit dauernd angetriebenen Förderrollen ausgerüstete Förderstrecke zu einer nachfolgenden Verteilmaschine weitertransportiert und dann in Abhängigkeit der Stellung der Richtungsweichen vor den Zielfächern beispielsweise in einem entsprechend dem Bestimmungsortes des Briefes zugeordneten Zielfach eingestapelt.

Die Abzugseinrichtung, welche mit der jeweils dem Abzugsband nächstliegenden Sendung zusammenwirkt, schiebt diese vorderste Sendung aufgrund eines Steuersignals, das die Bremskupplung eines dauernd laufenden Motors steuert bis in den Erfassungsbereich der Förderrollen der Förderstrecke; von dort wird diese Sendung mit der vorgegebenen Fördergeschwindigkeit v der Förderstrecke in die Verteilanlage transportiert.

Generell galt bisher, daß durch die Steuerung der Vereinzelungseinrichtung entsprechend einer gleichbleibenden minimalen Lücke zwischen aufeinanderfolgenden Sendungen die größtmögliche Förderdichte erzielt werden kann. Eine Steuerung in Abhängigkeit von Länge der zuvor abgegebenen Sendung zeigt die DE-C 27 58 007, bei der eine selbsttätige Wahl derjenigen Bezugskante einer bereits abgezogenen Sendung stattfindet, die für die Steuerung des Abzugsvorgangs für die nächste Sendung maßgebend sein soll, ohne daß jedoch die Länge der Sendung gemessen wird. Im Ergebnis wird bei kurzen Sendungen, deren Vorderkante als maßgebend ausgewählt und bei langen Sendungen deren Hinterkante

In der Europäischen Patentanmeldung 0167091 (Artikel 54(3) Dokument) wird außerdem beschrieben, daß die Länge einer vorlaufenden Sendungen gemessen und davon abhängig die Lücke zur nachfolgenden Sendung gesteuert wird, um in nachfolgenden Einrichtungen der Anlage eine annähernd konstante Lücke unabhängig von der Sendungslänge erreichen zu können.

Es dürfen im Hinblick auf die gegenseitigen Abstände der aufeinanderfolgenden Sendungen entlang der Förderstrecke und der nachfolgenden angeordneten Verteilanlage die gegenseitigen Abstände aufeinanderfolgender Sendungen einen gewissen Wert nich unterschreiten; dieser Minimalwert hängt zum einen vom im späteren Förderweg möglicherweise von Sendung zu Sendung unterschiedlich auftretenden Schlupf und zum anderen bei Vorhandensein einer nachfolgenden Verteilanlage von der Reaktionstoleranz der Weichensteuerung und der jeweils zulässigen Einstapelfolge (Einstapelverhalten) der einzelnen Sendungen in die Zielfächer ab. Der zu wählende optimale Abstand zwischen aufeinanderfolgenden Sendungen ist deshalb nicht konstant, sondern variabel. Das bedeutet, daß eine Steuerung auf konstante Abstände die Forderung einer maximal möglichen Förderleistung nicht erfüllt.

Um dies zu erreichen, werden erfindungsgemäß die für den optimalen Abstand relevanten Parameter der vorhergehenden abgezogenen Sendung und daraus der dazugehörige optimale Abstand ermittelt. Zwischenzeitlich wird vorzugsweise diese Sendung von der Förderstrecke erfaßt und weitertransportiert; die nachfolgende Sendung wird erst dann von der Abzugseinrichtung in Förderrichtung weitertransportiert, wenn die Hinterkante der vorausgehenden Sendung den vorgegebenen optimalen von den Parametern der vorausgehenden Sendung abhängigen Abstand zur Vorderkante der nachfolgenden Sendung besitzt.

Bei einer nachfolgenden Verteilanlage werden bevorzugt die Eigenschaften der Richtungsweichen (Reaktionstoleranz der Anordnung), Transportbänder, Transportgeschwindigkeit und Art der Stapelstellen (maximal mögliche Einstapelfolge) in die Abstandsoptimierung einbezogen. Vorzugsweise werden zur Auffindung des minimalen Abstandes, der zwischen zwei aufeinanderfolgenden Sendungen auftreten darf, zum einen die sendungsspezifischen und zum anderen anlagenspezifischen Parameter ermittelt. Da nur die vorauslauf ende Sendung den minimal möglichen Abstand zur nachfolgenden Sendung bestimmt, ist es nicht notwendig, Unterschiede der sendungsspezifischen Parameter von zwei aufeinanderfolgenden Sendungen zu ermitteln, sondern nur die Parameter der vorauslaufenden Sendung.

Die für die Ermittlung des minimal möglichen Abstandes relevanten Parameter der vorauslaufenden Sendung sind beispeilsweise Länge, Höhe, Dicke, Gewicht, Steifigkeit, u.ä.

Ist die vorauslaufende Sendung beispielsweise sehr lang, hoch und sehr dünn (Luftpolster), so ist ihre Einstapelzeit in ein Stapelfach gegenüber einer dicken, steifen und kurzen Sendung sehr lang, d.h., in diesem Falle ist eine relativ große Lücke zu wählen, damit die nachfolgende in dasselbe Stapelfach einlaufende Sendung die vorauslaufende Sendung am ordnungsgemäßen Einstapeln nicht hindert und umgekehrt.

Für eine vorauslaufende, sehr kurze, steife Sendung kann man eine sehr kleine Lücke wählen. Ist die Dicke der vorauslaufenden Sendung sehr groß und wird die nachfolgende Sendung in ein anderes Zielfach gesteuert, so hängt der minimal wählbare Abstand beispielsweise davon ab, wie schnell eine Weichenumstellung in der Verteilanlage erfolgen darf.

Erfindungsgemäß werden bei den auftretenden einzelnen Sendungen in dem Vereinzelungseinrichtung die Sendungsparameter wie Länge, Höhe, Dicke, und beispielsweise auch Steifigkeit ermittelt und mit Hilfe experimenteller Voruntersuchungen der zur jeweiligen Sendungsart im Verlauf des Sendungstransportes auftretende Schlupf sowie die dazugehörige Einstapelzeit in ein Zielfach und die Weichenumstellungszeit zugeordnet.

Daraus ergibt sich ein zulässiger Mindestabstand der vorauslaufenden Sendung zur nachfolgenden Sendung, der durch den größten der beiden Zeitwerte - Einstapelzeit oder Weichenumstellungstoleranz - sowie der Transportgeschwindigkeit der Sendungen vorgegeben wird.

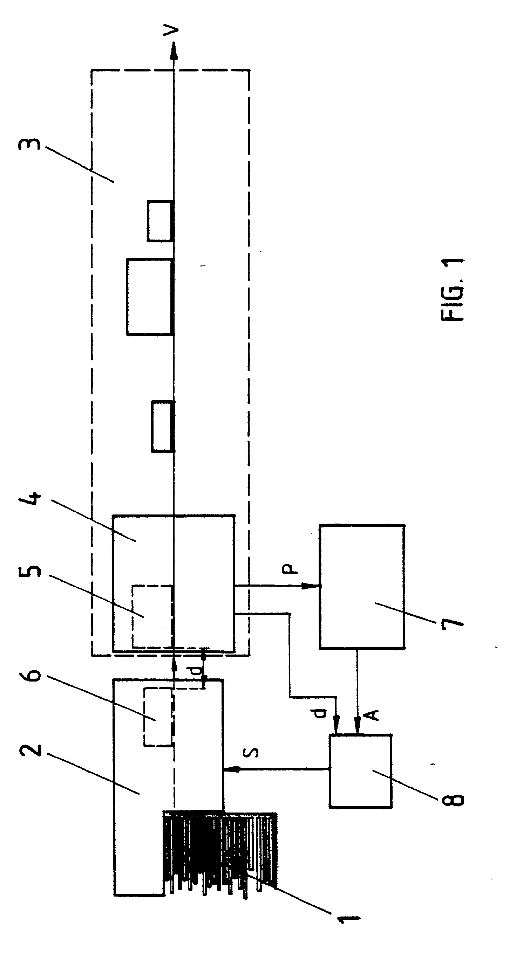

FIG. 1 zeigt die prinzipielle Darstellung der Steuerung einer Vereinzelungseinrichtung 2. Mittels einer Vereinzelungseinrichtung 2 werden Briefe beispielsweise von einem Stapel vereinzelt. Das Abziehen von Sendungen vom Sendungsstapel, d.h. nach welcher Zeit jeweils der nachfolgende Brief vom Stapel abgezogen wird, wird vorzugsweise abhängig von Höhe, Länge (Format), Dicke der vorausgehenden Sendung gewählt. Ist der Abzug des ersten Briefes abgeschlossen, so wird er von einer Förderstrecke 3 erfaßt und mit konstanter Geschwindigkeit v zum Zielort transportiert. Im Erfassungsbereich der Förderstrecke 3 ist vorzugsweise die Meßeinrichtung 4, die die für die optimale Abstandsermittlung notwendigen Parameter P der in die Förderstrecke 3 einlaufenden Briefe ermittelt, angeordnet.

Eine Signalaufbereitungseinrichtung 7 liefert aus den Parametern P des abgezogenen Brief es entsprechenden Eingangssignalen ein Ausgangssignal A, das dem minimal möglichen Soll-Abstandswert zum nachfolgenden Brief entspricht. Ein zeitverzögertes Triggersignal einer Steuereinheit 8 kann dann beispielsweise die Kupplung des Antriebmotors 30 zum Abzugsband 31 der Vereinzelungseinrichtung 2 aktivieren, wenn der Abstand d zwischen der Hinterkante des abgezogenen Briefes 5 und der Vorderkante des noch nicht abgezogenen Briefes 6 dem vorgegebenen Sollwert entspricht. Die Zeitverzögerung läßt sich z.B. aus der Transportgeschwindigkeit v des abgezogenen Briefes 5 und dem zeitlichen Abstandsverlauf zwischen Hinterkante des abgezogenen Briefes 5 und Vorderkante des noch nicht abgezogenen Briefes 6 ermitteln.

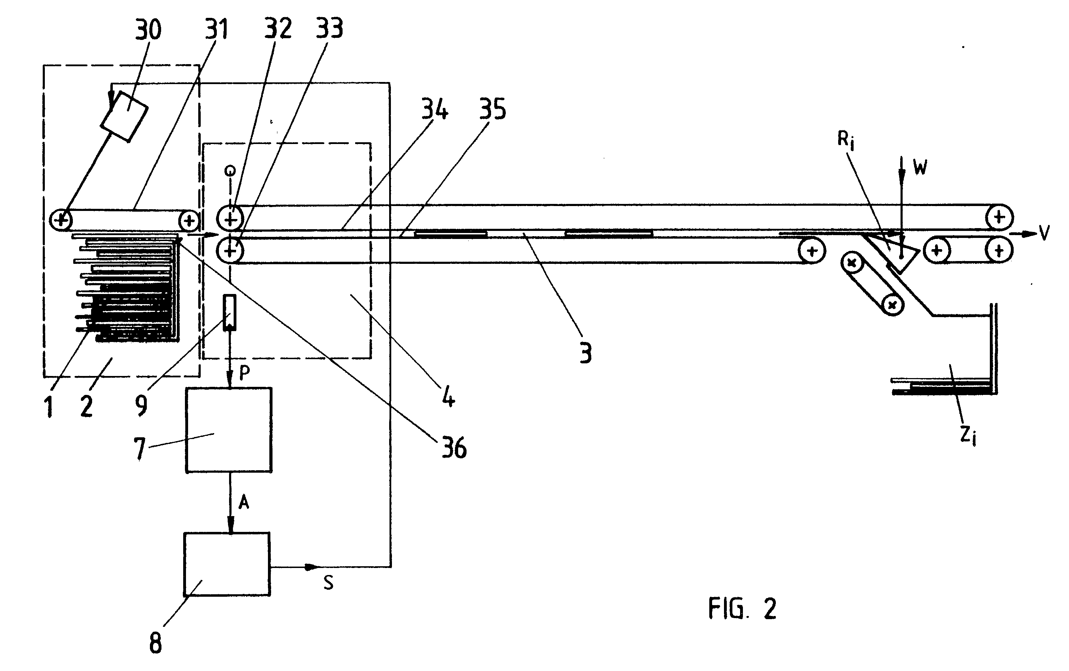

Einführend wird anhand eines vereinfachten Beispiels das grundsätzliche Prinzip der Meßeinrichtung 4 und der Steuereinheit 8 zur Durchführung des erfindungsgemäßen Verfahrens in FIG. 1 und 2 dargestellt.

Hierbei wird vereinfacht angenommen, daß zwei aufeinanderfolgende Briefe außer in ihrer Länge gleich sind.

FIG. 2 zeigt eine detaillierte Ansicht einer Vereinzelungseinrichtung 2 mit deren Hilfe aus einem Stapel 1 Briefe z.B. vereinzelt werden können. In der Vereinzelungseinrichtung 2 werden stets der vorderste dem Abzugsband 31 nächstliegende Brief vom über einen Motor 30 angetriebenen Abzugsband 31 erfaßt und von dort aus der Vereinzelungseinrichtung 2 in Richtung der nachfolgenden Förderstrecke 3 abgezogen.

Gelangt dieser Brief (FIG. 1) in den Erfassungsbereich der Förderstrecke 3, d.h. zwischen die um die Umlenkrollen 32, 33 laufenden Transportbänder 34, 35, so wird er weitertransportiert beispielsweise in die nachfolgende Verteilanlage 26. Der nachfolgende Brief 6 bleibt vorzugsweise in der Abzugseinrichtung.

Vorzugsweise ist im Erfassungsbereich der Förderstrecke 3 eine Lichtschranke 9 (FIG. 2) angeordnet, die einen Stop-Befehl für die Vereinzelungseinrichtung 2 (Bremse der Bremskupplung des Motors 30 wird aktiviert) liefert, solange der abgezogene Brief 5 (FIG. 1) die Lichtschranke 9 (FIG. 2) auf "dunkel" stellt.

Die Vorderkante des nachfolgenden Briefes 6 (FIG. 1) bleibt deshalb in der Abzugseinrichtung an der Anschlagswand 36 (FIG. 2) beispielsweise solange stehen, so lange, bis das von der Steuereinheit 8 gelieferte Triggersignal S (Startsignal) den Antrieb der Vereinzelungseinrichtung aktiviert.

Für den speziellen Fall, daß beide Briefe in dasselbe Zielfach $Z_i$ (FIG. 2) einer nachfolgenden Verteilanlage 26 eingestapelt werden sollen und der Schlupfunterschied vernachlässigbar ist (Vereinfachung), wird in diesem einfachen Fall aus der Länge L des vorauslaufenden Briefes die benötigte Einstapelzeit dieses Briefes, d.h. die Zeit, die der Brief für seine ordnungsgemäße Ablage in ein Zielfach $Z_i$ benötigt und nach der der nachfolgende Brief mit seiner Vorderkante den Bereich der Hinterkante des eingestapelten Briefes erreichen darf, ohne daß er auf dessen Hinterkante beim Einstapeln stößt, abgeleitet. Die Umstellungszeit und Toleranz der Weichen $R_i$ kann unberücksichtigt bleiben, da keine Umstellung für den nachfolgenden Brief notwendig ist.

Aus der Kenntnis des Einstapelverhaltens des vorauslaufenden Briefes - entsprechend seiner Länge (vereinfachte Annahme zur Veranschaulichung: Einstapelverhalten nur abhängig von der Brieflänge) - ergibt sich in Verbindung mit der Transportgeschwindigkeit v der Briefe auf der Förderstrecke 3 daraus der notwendige Minimalabstand zum nachfolgenden Brief.

Vorzugsweise mittels einer nach der Vereinzelungseinrichtung 2 angeordneten Meßeinrichtung 4 wird die Brieflänge L des vorauslaufenden Briefes ermittelt.

Vorzugsweise wird hierzu die im Erfassungsbereich der Förderstrecke 3 angeordnete Lichtschranke 9 eingesetzt; aus dem Zeitintervall der Dunkelstellung der Lichtschranke 9 und der vorgegebenen Transportgeschwindigkeit v des abgezogenen Briefes innerhalb der Förderstrecke 3 ergibt sich ein Maß für die Brieflänge L.

Vorzugsweise wird dieses Ausgangssignal einer Signalaufbereitungseinrichtung 7 zugeführt, die ein Triggersignal nach einer in Abhängigkeit der Länge des zuvor abgezogenen Briefes sich ergebenden Zeit der Steuereinheit 8 liefert und damit ein Start-Signal S der Vereinzelungseinrichtung 2 zugeführt wird, das den Transport des im Abzugsbereich liegenden nachfolgenden Briefes in den Erfassungsbereich der Förderstrecke 3 bewirkt. Dies ist dann der Fall, wenn der Abstand d (FIG. 1) zwischen dem in der Förderstrecke 3 transportierten Brief und dem in der Vereinzelungseinrichtung 2 nachfolgenden Brief mit dem von der Signalaufbereitungseinrichtung 7 vorgegebenen Abstand übereinstimmt. Aus dem Vergleich des aus der Brieflänge sich ergebenden Sollwertes für den Abstand und des momentanen Abstandes erzeugt die Signalaufbereitungsschaltung 7 bei Übereinstimmung ein Triggersignal A, das der Steuereinheit 8 zugeführt wird.

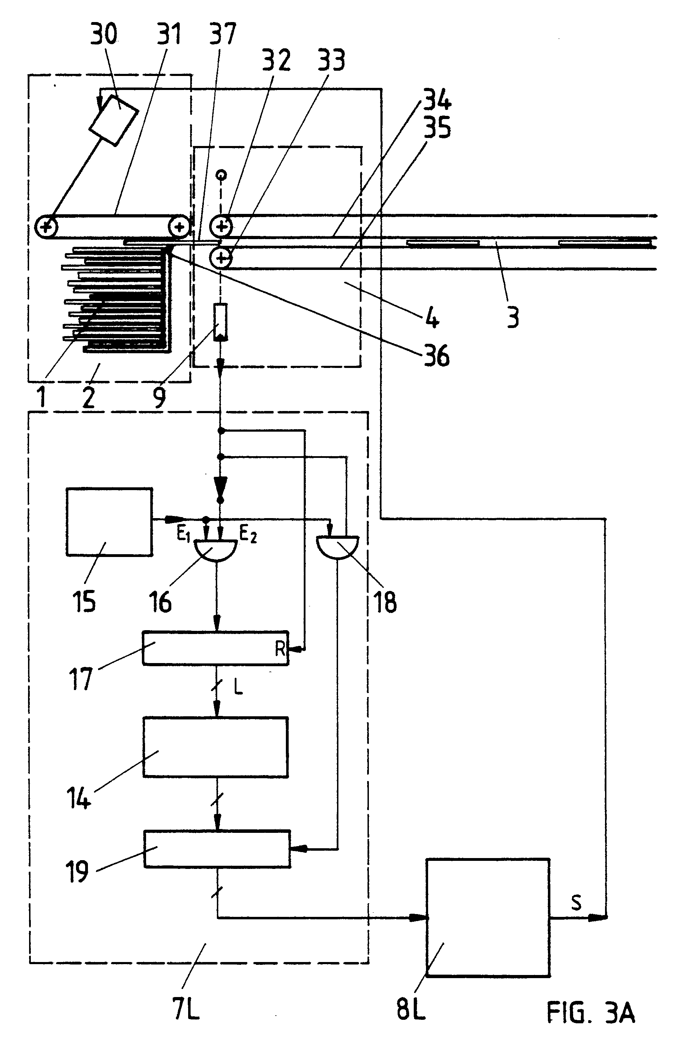

Eine geeignete Signalaufbereitungseinrichtung 7L für diesen speziellen Fall (nur Längenparameter in Rechnung gestellt) in Verbindung mit einer vorteilhaft gelösten Meßeinrichtung 4 zeigt FIG. 3A.

Der vorauslaufende Brief 37 schaltet die Lichtschranke 9 auf dunkel, wenn er mit seiner Vorderkante in den Lichtschrankenbereich eintritt. Ein Meßtaktgeber 15 liefert innerhalb der Dunkel-Stellung der Lichtschranke 9 eine entsprechende Anzahl von Impulsen, die vorzugsweise mittels eines Zählers 17 gezählt werden. Die Anzahl der Impulse entspricht der Sendungslänge L bei einer vorgegebenen Transportgeschwindigkeit v des Briefes.

Vorzugsweise wird der Zähler 17 bei Verdunkelung der Lichtschranke 9 auf Null gesetzt.

Vorzugsweise wird der Eingang eines Dekodierers 14, beispielsweise in Form eines ROMS ausgebildet, mit dem Ausgang des Zählers 17 (beispielsweise mit einem n-Bit-Ausgang; mit n = 5) verbunden. Der Dekodierer 17 enthält vorzugsweise eine Tabelle in der zu jedem anliegenden Adreßwert, d.h. Brieflänge L, ein Abstandswert zugeordnet ist (Sollwert). Der von der Brieflänge L abhängige vorgegebene Abstandswert liegt in vorteilhafter Weise am Datenausgang des ROMS. Mit diesem Ausgangswert wird ein weiterer für die Abstandsmessung verwendeter Zähler 19 voreingestellt.

Vorzugsweise wird der Soll-Abstandswert vermindert um den Abstand der Hinterkante des abgezogenen Briefes zur Vorderkante des noch nicht abgezogenen Briefes zum Zeitpunkt der Dunkel-Hell-Umschaltung der Lichtschranke 9. Dieser Abstand ist abhängig von der relativen Lage der Förderstrecke zur Vereinzelungseinrichtung und deshalb eine anlagenspezifische Konstante. Der Start des Zählers 19, vorzugsweise ein abwärts arbeitender Zähler 19, wird mit der Hinterkante der Sendung durch die Dunkel-Hell-Stellung der Lichtschranke 9 initiiert und durch die Meßtakt-Geber-Signale 15 abwärtsgezählt.

Der momentane Ausgangswert dieses abwärts arbeitenden Zählers 19 entspricht deshalb dem Sollwert abzüglich dem momentanen Abstand zwischen der Hinterkante des vorauslaufenden und der Vorderkante des noch nicht vollständig abgezogenen, beispielsweise an der Anschlagswand 36 auf Abruf mit seiner Vorderkante stehenden Briefes. Ist der Ausgangswert Null - Soll- und Istwert des Abstandes stimmen miteinander überein - so initiiert die nachgeschaltete Steuereinheit 8L, die beispielsweise eine Komparatoreinheit $K_1$ enthält, ein Ausgangssignal S, beispielsweise "High", das das Abzugsband 31 der Vereinzelungseinrichtung 2 wieder antreibt (Ansteuerung der Bremskupplung). Ist das Ausgangssignal der Komparatoreinheit $K_1$ "Null" oder beispielsweise "LOW", so wird das Abzugsband 31 nicht bewegt (Stillstand).

Damit der abgezogene Brief auch möglichst definiert von der Förderstrecke 3 erfaßt wird, sollte diese Lichtschranke 9 im Erfassungsbereich der Förderstrecke angeordnet sein.

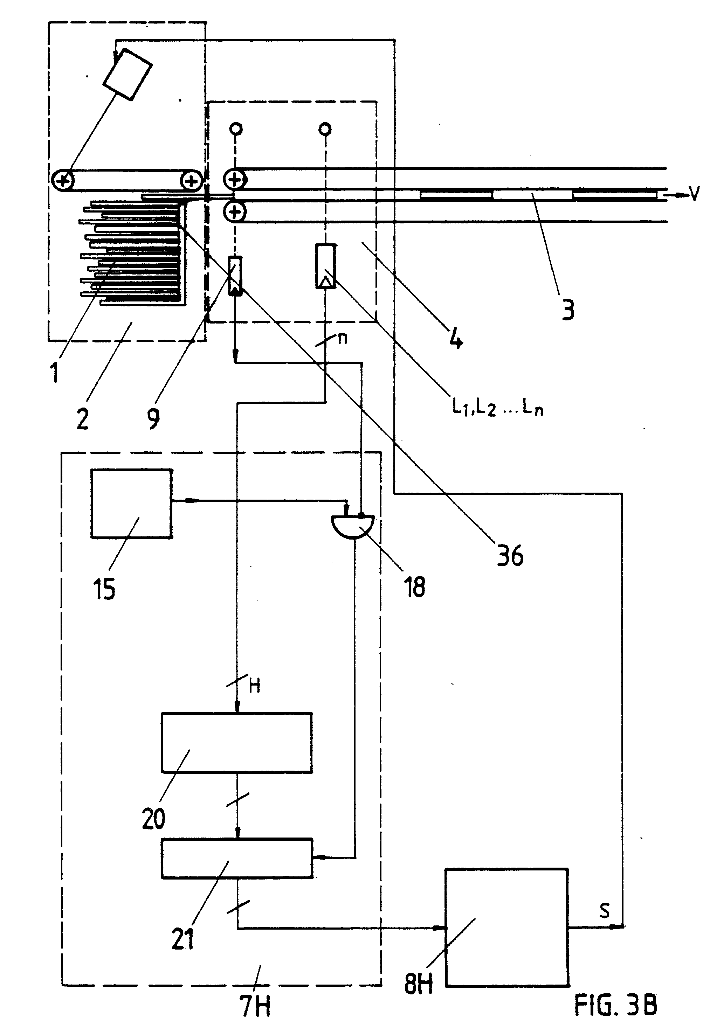

FIG. 3B zeigt eine Einrichtung zur Messung der Höhe H eines Briefes mit dem dazugehörenden Signalaufbereitungseinrichtung 7H.

Vorzugsweise wird zur Ermittlung der Briefhöhe H eine vertikal zur Förderrichtung aufgebaute Lichtschrankenzeile $L_1, L_2,...L_n$ im Erfassungsbereich der Förderstrecke 3 angeordnet. Entsprechend der notwendigen Meßgenauigkeit wird eine entsprechend große Anzahl n von Lichtschranken eingesetzt.

In vorteilhafter Weise sind die Ausgänge der Lichtschranken $L_1, L_2,...L_n$ direkt mit den Adreßeingängen eines Dekodierers 20, beispielsweise ein ROM, verbunden. Das ROM liefert ein Bit-Muster entsprechend dem zur Briefhöhe notwendigen gegenüber des nachfolgenden Briefes einzuhaltenden Abstandswert (Sollwert). Damit wird ein nachgeschalteter Abwärtszähler 21 voreingestellt.

Vorzugsweise wird dieser voreingestellte Wert noch reduziert um den Abstand zwischen Vorderkante des noch nicht abgezogenen Briefes (entsprechend Stapelwand 36) und Hinterkante des abgezogenen Briefes bzw. Lichtschranke 9 (siehe auch Signalaufbereitung bei längenabhängigem Abstandssollwert).

Der Abwärtszähler 21 wird ebenfalls vorzugsweise durch die Dunkel- Hell-Steuerung der Lichtschranke 9 aufgrund der Hinterkante des in der Förderstrecke transportierten Briefes initiiert.

Der momentane Ausgangswert dieses Zählers 21 entspricht dem Sollwert abzüglich dem momentanen Abstand d zwischen vorauslaufendem und dem noch nicht abgezogenen darauffolgenden Brief.

Ist der Zählerstand des Abwärtszählers 21 Null, so liefert eine nachfolgende weitere Komparatoreinheit $K_2$ enthaltende Steuereinheit 8H ein auf "High" liegendes Steuersignal. Vorzugsweise werden die von der Sendungslänge- und Höhenmessung auftretenden Steuersignale einer UND-Schaltung zugeführt und das Ausgangssignal S dieser UND-Schaltung zur Ansteuerung der Bremskupplung der Vereinzelungseinrichtung verwendet.

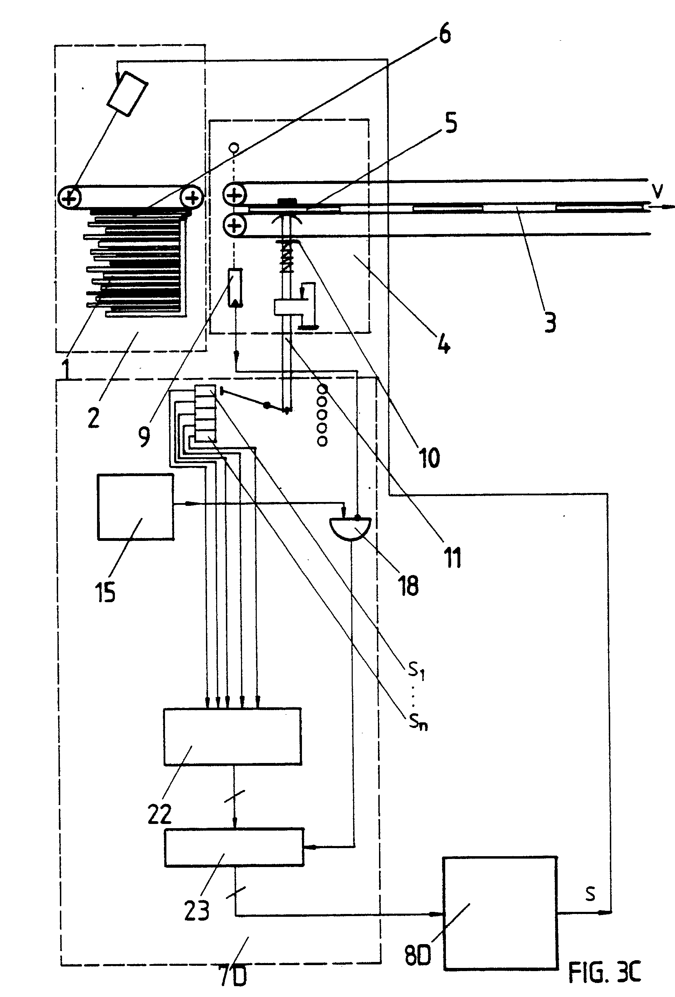

FIG. 3C zeigt den Fall einer Dickenmessung und die Schaltungsanordnung der Steuerung des sich daraus ergebenden Soll-Abstandswertes entsprechend den vorherigen Beispielen (Dekodiereinrichtung 22 und Abwärtszähler 23 sowie Steuereinheit 8D). Die Dickenmessung erfolgt beispielsweise mit einem Drehwinkelgeber 10, der einen Stößel 11 enthält, der sich in Abhängigkeit mit der auftretenden Briefdicke D innerhalb einer Lichtschrankenkette $S_1, S_2,...S_5$ sich bewegt. Beispielsweise aus der Dunkelstellung der speziellen Lichtschranke ergibt sich die Dicke D.

Entsprechend den vorherigen Beispielen können weitere Sendungsparameter, die den zu wählenden Abstand d zweier aufeinanderfolgender Sendungen bestimmen, wie z.B. Gewicht, Rauhigkeit ermittelt werden. Daraus ergibt sich mittels der Signalaufbereitungseinrichtung 7, die vorzugsweise weitere Dekodiereinrichtungen enthält, der Zeitpunkt zum Abziehen der im Abzugsbereich der Vereinzelungseinrichtung 2 liegenden nachfolgenden Sendung. Der Worst-Case,d.h. der aus den individuellen Sendungsparametern P sich ergebende zulässige Minimalabstand (entsprechend dem maximalen Ausgangswert einer der Dekodiereinrichtungen), wird ausgewählt.

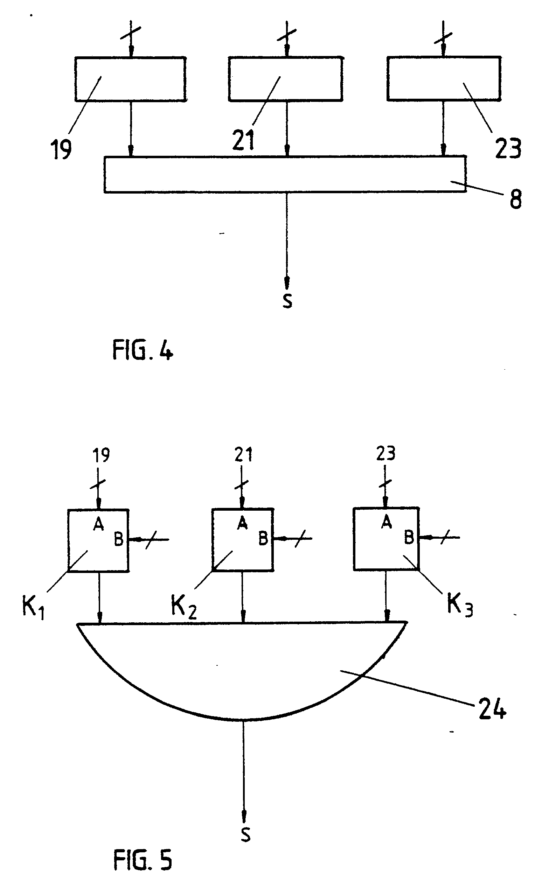

In vorteilhafter Weise wird eine in der Steuereinheit 8 (FIG. 4) ausgangsseitig liegende UND-Schaltung, deren Eingänge direkt mit den Ausgängen der individuellen Signalaufbereitungseinrichtungen 7L, 7H, 7D, verbunden sind, dafür eingesetzt. Erst wenn alle Ausgangszähler 19, 21, 23 auf Null stehen, liefert die Steuereinheit 8 mit ihrer am Ausgang liegenden UND-Schaltung das Steuersignal S für den Antrieb des Abzugsbandes (siehe FIG. 4).

In FIG. 5 ist eine vorteilhafte Anordnung einer Steuereinheit 8 für den Fall, daß mehrere Sendungsparameter, im Beispielsfall 3 (Höhe, Länge, Dicke z.B.) durch die Meßeinrichtung 4 ermittelt werden und diese Ergebnisse über die dazugehörigen Signalaufbereitungseinrichtungen 7L, 7H, 7D der Steuereinheit 8 zugeführt werden, dargestellt. Diese Schaltungsanordnung ist insbesondere für eine Fein-Optimierung der Abstände aufeinanderfolgender Briefe geeignet.

In zweckmäßig erweiterter Ausführung können die einzelnen Parameter kombiniert werden, derart, daß z.B. eine lange steife vorauslaufende Sendung eine kleinere Lücke zur nachfolgenden Sendung zuläßt, als eine lange weiche Sendung.

Vorzugsweise enthält die Steuereinheit 8 eingangsseitig Komparatoren $K_1$, $K_2$, $K_3$. Die Ausgangssignale der Komparatoren $K_1$, $K_2$, $K_3$ liegen dann auf "HIGH", wenn die dazugehörigenAusgänge der von den parameterspezifischen Abwärtszählern 19, 21, 23, die mit den A-Eingängen der entsprechenden Komparatoren $K_1$, $K_2$, $K_3$ verbunden sind, alle auf "Null" liegen; die B-Eingänge liegen in diesem speziellen Fall ebenfalls auf "Null".

In FIG. 5 liefert die UND-Schaltung dann das Steuersignal S für den Antrieb des Abzugsbandes, wenn das Ausgangssignal der UND- Schaltung auf "HIGH" liegt.

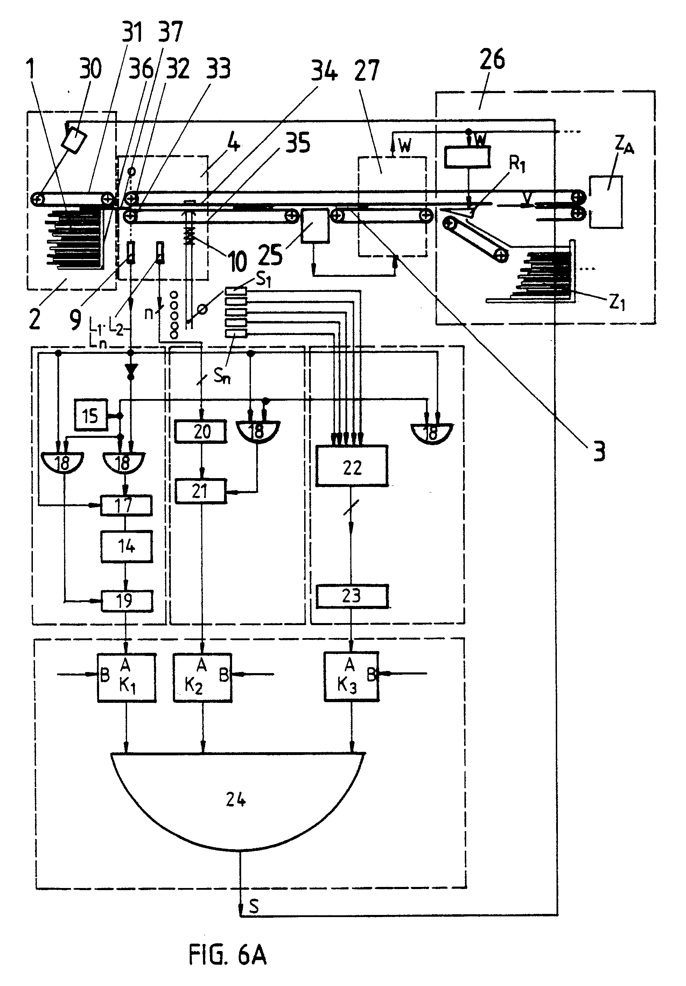

FIG. 6A zeigt eine Weiterbildung der erfindungsgemäßen Lösung. Um anlagenspezifische Veränderungen, insbesondere die während des Warmlaufens der Anlage auftretenden Änderungen des Abzugs- und Transportvorganges überprüfen und dadurch möglicherweise auftretende Betriebsstörungen verhindern zu können, wird vorzugsweise vor einer Verteilanlage 26, in der die einlaufenden Briefe über Richtungsweichen $R_1, R_2, ... R_n$ in die entsprechenden Zielfächer $Z_i$ eingestapelt werden, eine Prüf-Meßeinrichtung 27 angeordnet, die im wesentlichen dieselben Parameter P der individuellen Briefe wie beispielsweise Länge, Höhe, Dicke sowie die Abstände der aufeinanderfolgenden Briefe ermittelt.

Vorzugsweise ermittelt die Prüf-Meßeinrichtung 27 die Parameter der Briefe in gleicher Weise wie die Meßeinrichtung 4 und besitzt ebenfalls eine Signalaufbereitungseinrichtung sowie eine Steuereinheit. Dadurch wird in einfacher Weise eine Kontrolle möglich, insbesondere bezüglich der Abweichung des Sollwertes vom Istwert der Briefabstände. Für den Fall, daß der Abstand d zweier aufeinanderfolgender Briefe zu klein geworden ist, da beide beispielsweise in dasselbe Zielfach $Z_i$ eingestapelt werden sollen, kann dieser Störfall verhindert werden, wenn der nachfolgende Brief in ein Auffangfach $Z_A$ geschleust werden kann. Voraussetzung dafür ist eine entsprechend schnell arbeitende Steuerung der Richtungsweichen $R_1, R_2, ... R_n$.

Ferner kann z.B. bei einer dicken Sendung der Zielinformation für diese Sendung ein Zusatzwert beigefügt werden, der den Umschaltzeitpunkt einer Weiche verzögert, wenn die Sendung diese Weiche verläßt.

Im Vergleich zur Meßeinrichtung 4 ist deshalb eine zusätzliche Abstandsmessung d, die entsprechend der Längenmessung beispielsweise arbeiten kann, mit der Prüf-Meßeinrichtung 27 durchzuführen; das Start-Signal für die Abstandsmessung wird dann in vorteilhafter Weise durch die Hinterkante des Briefes, d.h. durch eine Dunkel-Hell-Ansteuerung einer Lichtschranke initiiert. Entsprechend der Anzahl der auftretenden Taktgebersignale wird ein Zähler beispielsweise innerhalb der Hellphase der Lichtschranke auf einen Wert laufen, der dem Abstand zweier aufeinanderfolgender Briefe entspricht. Wenn der Meßwert des Abstandes mit dem aus den Parametern der Briefe sich ergebende Abstandswert (Sollwert) innerhalb einer vorgegebenen Toleranz nicht übereinstimmt, also zu klein ist, wird in vorteilhafter Weise ein hierzu in der Prüf-Meßeinrichtung 27 eingesetzter Komparator ein Steuersignal W für den Umschlag der Richtungsweiche $R_1$, der vorzugsweise dann stattfindet, wenn der vorauslaufende Brief die Weiche durchlaufen hat, liefern, derart, daß der nachfolgende Brief in das Auffangfach $Z_A$ gelangt. Dies ist in FIG. 6A schematisch dargestellt für den einfachen Fall eines Zielfaches $Z_A$ und eines Auffangfaches $Z_1$ mit einer Richtungsweiche $R_1$.

Wenn mehrere Zielfächer, dieses ist der Normalfall, in der Verteilanlage vorhanden sind, beispielsweise in Serie, so sind abhängig vom Bestimmungsort des Briefes die Richtungsweichen $R_1, R_2, ... R_n$ für das Einstapeln des Briefes in das zugehörige Zielfach $Z_i$ entsprechend zu steuern. Die Ermittlung des Bestimmungsortes sowie die Steuerung der Weichen $R_1, R_2, ... R_n$ wird vorzugsweise mittels einer Zielerkennungseinrichtung 25 durchgeführt.

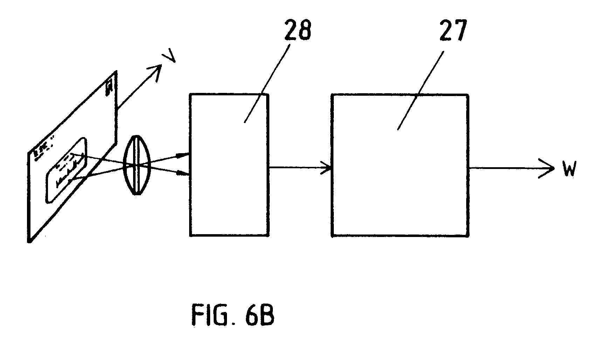

Die Zielerkennungseinrichtung 25 erfaßt vorzugsweise nach der Meßeinrichtung 4 den Bestimmungsort des Briefes. Vorzugsweise wird hierzu ein Bar-Code-Leser 28 eingesetzt (siehe FIG. 6B), der mit Hilfe seiner Ausgangssignale die Richtungsweichen $R_1, R_2, ... R_n$ steuert und die Prüf-Meßeinrichtung 27 darüber informiert, ob aufeinanderfolgende Sendungen in dasselbe Zielfach geschleust werden oder nicht.

Unter der Voraussetzung, daß die Weichenumstellungszeit so kurz ist, daß der minimale Abstand zwischen aufeinanderfolgenden Briefen davon nicht abhängig ist und die Zielfächer aufeinanderfolgender Briefe verschieden sind, können die aufeinanderfolgenden Briefe durchaus mit einem kleineren Abstandswert als der von der Meßeinrichtung vorgeschriebene Abstands-Sollwert in die Verteilanlage eingeschleust werden, ohne daß eine Störung zu befürchten ist.

Mit dieser erfindungsgemäßen Lösung läßt sich der Durchsatz von Briefen innerhalb der Förderstrecke 3 bei gleichbleibenderTransportgeschwindigkeit v wesentlich erhöhen; insbe-

sondere dann, wenn in der Sendungsmischung sehr kurze Sendungen enthalten sind. Durchsatzerhöhungen von über 20% sind bei der Vereinzelungseinrichtung 2 in Verbindung mit Verteilanlagen erreichbar.

Bei Vereinzelungseinrichtungen in Verbindung mit Verteilanlagen bestimmt meistens das Einstapelverfahren den zulässigen minimalen Abstand zwischen aufeinanderfolgenden Sendungen, wenn die aufeinanderfolgenden Sendungen in dasselbe Zielfach $Z_i$ gesteuert werden müssen.

Wenn die aufeinanderfolgenden Sendungen nicht in dasselbe Zielfach $Z_i$ gesteuert werden, bestimmt im wesentlichen die Art der Richtungsweiche $R_i$ (Bauart, Umschlag-Geschwindigkeit und Toleranzen) die erlaubten minimalen Abstände zwischen aufeinanderfolgenden Sendungen.

Da aufgrund der mechanischen Beanspruchung der Sendungen eine Durchsatzerhöhung durch Steigerung der Transportgeschwindigkeit v nur bedingt möglich ist, kann mit der erfindungsgemäßen Lösung die Wirtschaftlichkeit von Briefverteilanlagen wesentlich verbessert werden.

## Ansprüche

1. Verfahren zum Steuern des Abzugsvorgangs bei einer Vereinzelungseinrichtung zur aufeinanderfolgenden Zuführung von Sendungen mit unterschiedlicher Länge, insbesondere Briefsendungen, Postkarten oder ähnlichen, in einem Förderer mit einer der Vereinzelungseinrichtung entlang des Förderwegs der Sendungen nachgeordneten Meßeinrichtung, deren Signale einer Steuereinrichtung zur Steuerung des Abzugs zugeführt werden, wobei der Abstand der Hinterkante der bereits abgezogenen Sendung von der Vorderkante der nächstfolgenden abzuziehenden Sendung von der Meßeinrichtung ermittelt wird und die Steuereinrichtung ein Steuersignal zum Abzug der abzuziehenden Sendung an die Vereinzelungseinrichtung gibt, sobald dieser Abstand einen vorgegebenen Soll-Wert erreicht hat, dadurch gekennzeichnet, daß die Meßeinrichtung für die Ermittlung eines minimal möglichen Abstandes die dafür relevanten Parameter der bereits abgezogenen Sendung wie beispielsweise Länge, Dicke, Höhe, Gewicht, Steifigkeit, Oberflächenrauhigkeit, mißt, daß die Meßwerte der Parameter einer Signalauswertungseinrichtung zugeführt werden, die diesen Meßwerten ein Ausgangssignal zuordnet, das ein Maß für den Soll-Wert des Abstandes zwischen der Hinterkante der abgezogenen und der Vorderkante der abzuziehenden Sendung darstellt und daß dieses Ausgangssignal der Steuereinrichtung zugeführt wird.

2. Anordnung zur Durchführung des Verfahrens nach Anspruch 1 zum Steuern des Abzugsvorgangs bei einer Vereinzelungseinrichtung (2) zur aufeinanderfolgenden Zuführung von Sendungen mit unterschiedlicher Länge, insbesondere Briefsendungen, Postkarten oder ähnlichen, in einem Förderer mit einer der Vereinzelungseinrichtung (2) entlang des Förderwegs der Sendung nachgeordneten Meßeinrichtung (4), deren Signale einer Steuereinheit (8) zur Steuerung des Abzugs zugeführt werden, wobei der Abstand der Hinterkante der bereits abgezogenen Sendung (5) von der Vorderkante der nächstfolgenden abzuziehenden Sendung (6) von der Meßeinrichtung (4) ermittelt wird und die Steuereinheit (8) ein Steuersignal (S) zum Abzug der abzuziehenden Sendung (6) an die Vereinzelungseinrichtung (2) gibt, sobald dieser Abstand einen vorgegebenen Soll-Wert erreicht hat, dadurch gekennzeichnet, daß bei der Meßeinrichtung (4) Mittel vorgesehen sind, um für die Ermittlung eines minimal möglichen Abstandes die dafür relevanten Parameter der bereits abgezogenen Sendung wie beispielsweise Länge, Dicke, Höhe, Gewicht, Steifigkeit, Oberflächenrauhigkeit zu messen, daß eine Signalaufbereitungseinrichtung (7) vorgesehen ist, der die Meßwerte der Parameter zugeführt werden, und daß Mittel bei der Signalaufbereitungseinrichtung (7) vorgesehen sind, um den Meßwerten der Parameter ein Ausgangssignal zuzuordnen, das ein Maß für den Soll-Wert des Abstandes zwischen der Hinterkante der abgezogenen und der Vorderkante der abzuziehenden Sendungen darstellt.

3. Anordnung nach Anspruch 2, dadurch gekennzeichnet, daß die Meßeinrichtung (4) die Sendungsparameter Länge (L), Höhe (H) und Dicke (D) der zuletzt abgezogenen Sendungen ermittelt.

4. Anordnung nach einem der Ansprüche 2 bis 3, dadurch gekennzeichnet, daß die Meßeinrichtung (4) im Erfassungsbereich der dauernd angetriebenen Förderstrecke (3) eine Lichtschranke (9) enthält, daß die Meßeinrichtung (4) aus der Zeitdauer der Dunkel-Aussteuerung der Lichtschranke (9) und der Transportgeschwindigkeit (v) der Förderstrecke (3) die Länge (L) der abgezogenen Sendung ermittelt.

5. Anordnung nach einem der Ansprüche 2 bis 4, dadurch gekennzeichnet, daß die Meßeinrichtung (4) zur Ermittlung der Höhe (H) der abgezogenen Sendung in der Vertikalen weitere mehrere vertikal übereinander angeordnete Lichtschranken (L1,...Ln) enthält,
daß aus der Anzahl der auf dunkel geschalteten Lichtschranken (L1,...Ln) sich die Höhe (H) der Sendung ergibt.

6. Anordnung nach einem der Ansprüche 2 bis 5, dadurch gekennzeichnet, daß die Meßeinrichtung (4) zur Ermittlung der Dicke (D) der abgezogenen Sendung (5) eine federnd gelagerte Stößeleinrichtung (10) enthält,
daß die Stößeleinrichtung (10) auf die Förderbänder (12, 13) einwirkt,
daß der durch die Dicke (D) der momentan durchlaufenden Sendung abhängige Abstand der Förderbänder (12, 13) die Stößelstellung angibt.

7. Anordnung nach einem der Ansprüche 2 bis 6, dadurch gekennzeichnet, daß die Messung des Abstandes (d) zwischen den Sendungen mittels der Lichtschranke (9) erfolgt, daß die Meßeinrichtung (4) aus der Zeitdauer der Hell-Aussteuerung der Lichtschranke (9) und der Transportgeschwindigkeit(v) den Abstand (d) zwischen der abgezogenen und der noch nicht abgezogenen Sendung ermittelt.

8. Anordnung nach einem der Ansprüche 2 bis 7, dadurch gekennzeichnet, daß die Signalaufbereitungsschaltung (7' 7L) eine Dekodiereinrichtung (14) enthält,
daß die Dekodiereinrichtung ein als Maß für den zu wählenden Abstand zur nachfolgenden Sendung entsprechendes Ausgangssignal (A) liefert in Abhängigkeit der eingangsseitig entsprechend den ermittelten Sendungsparametern anliegenden Eingangssignalen.

9. Anordnung nach Anspruch 8, dadurch gekennzeichnet, daß die Signalaufbereitungseinrichtung (7) für die Längenmessung einen Meßtaktgeber (15) enthält, dessen Ausgang mit dem einen Eingang (E1) eines UND-Gliedes (16) verbunden ist,
daß der andere Eingang (E2) des UND-Gliedes mit dem Ausgang der Lichtschranke (9) verbunden ist,
daß, wenn die Vorderkante der Sendung (5) in den Lichtschrankenbereich eintritt, der Start zur Längenmessung beginnt,
daß ein Aufwärtszähler (17) durch die Hell-Dunkel-Flanke auf Null gesetzt wird,
daß der Aufwärtszähler (17) die Anzahl der Impulse des Meßtaktgebers (15) innerhalb des Zeitintervalls der Dunkel-Stellung der Lichtschranke (9) zählt,
daß die Dekodiereinrichtung (14) in Abhängigkeit des vom Aufwärtszähler (17) gelieferten Eingangswertes (L) einen für den Abstand zur nachfolgenden Sendung (6) zu wählenden Ausgangswert liefert.

10. Anordnung nach einem der Ansprüche 8 bis 9, dadurch gekennzeichnet, daß ein weiteres UND-Glied (18) einen Lückentakt zur Abstandsmessung für einen Abwärtszähler (19) erzeugt,
daß der Meßtaktgeber (15) über das weitere UND-Glied (18) den Lückentakt liefert, wenn die Sendungshinterkante den Bereich der Lichtschranke (9) verläßt,
daß die Dekodiereinrichtung (14) mit ihrem Ausgangssignal die Voreinstellung des Abwärtszählers (19) durchführt, daß der momentane Ausgangswert des Abwärtszählers (19) der Abweichung des Abstandes (d) zweier Sendungen (5, 6) vom Sollwert entspricht.

11. Anordnung nach Anspruch 9, dadurch gekennzeichnet, daß die Meßeinrichtung (4) die Lichtschranken (L1,...Ln) für die Höhenmessung der Sendung (5) enthält,
daß jede einzelne Lichtschranke (Li) mit den Dateneingängen einer anderen innerhalb der Signalaufbereitungseinrichtung (7, 7H) liegenden Dekodiereinrichtung (20) verbunden sind,
daß die andere Dekodiereinrichtung (20) in Abhängigkeit der Anzahl (Z) der auf "dunkel" geschalteten Lichtschranken (L1,...Ln) einen zu wählenden von der Höhe (H) der Sendung abhängigen Ausgangswert für den Abstand zur nachfolgenden Sendung liefert.

12. Anordnung nach Anspruch 11, dadurch gekennzeichnet, daß der Meßtaktgeber (15) über das weitere UND-Glied (18) mit dem Takteingang eines weiteren Abwärtszählers (21) verbunden ist,
daß die andere Dekodiereinrichtung (20) mit ihrem Ausgangswert den weiteren Abwärtszähler (21) voreinstellt, daß der momentane Ausgangswert des weiteren Abwärtszählers (21) der Abweichung des Abstandes (d) zweier aufeinanderfolgender Sendungen vom Sollwert entspricht.

13. Anordnung nach einem der Ansprüche 6 bis 12, dadurch gekennzeichnet, daß die Meßeinrichtung (4) für die Dickenmessung eine weitere Lichtschrankenkette (S₁,...Sₙ) enthält, die die Stellung des Stößels (11) erfaßt,

daß aus der Lage der auf "dunkel" geschalteten Lichtschranke (Sᵢ) die Dicke (D) der momentan in der Förderstrecke (3) sich befindenden Sendung (5) ergibt,

daß der Dickenwert (D) einer dritten Dekodiereinrichtung (22) innerhalb der Signalaufbereitungseinrichtung (7, 7D) zugeführt ist,

daß die dritte Dekodiereinrichtung (22) einen in Abhängigkeit der Sendungsdicke (D) zu wählenden Abstandswert zur nachfolgenden Sendung (6) ausgibt,

daß ein dritter Abwärtszähler (23) mit diesem Wert voreingestellt wird,

daß der Meßtaktgeber (15) über das weitere UND-Glied (18) mit dem Takteingang des dritten Abwärtszählers (23) verbunden ist.

14. Anordnung nach einem der Ansprüche 10 bis 13, dadurch gekennzeichnet, daß die Steuereinheit (8; 8L, 8H, 8D) ein Steuersignal (S) liefert, wenn einer der Abwärtszähler (19, 21, 23) einen vorgegebenen Ausgangswert liefert.

15. Anordnung nach Anspruch 14, dadurch gekennzeichnet, daß die Steuereinheit (8) ein Steuersignal (S) liefert, wenn alle Abwärtszähler (19, 21, 23) vorgegebene Ausgangswerte liefern.

16. Anordnung nach einem der Ansprüche 2 bis 15, dadurch gekennzeichnet, daß die Steuereinheit (8) eine zu bestimmende Anzahl von Sendungsparametern entsprechende Anzahl von Komparatoren (K₁, K₂,...Kₙ) enthält,

daß die Ausgänge der Komparatoren mit den entsprechenden Eingängen einer weiteren UND-Schaltung (24) verbunden sind,

daß die Komparatoren ein Ausgangssignal "High" liefern, wenn die Ausgänge der Abwärtszähler alle auf "LOW" liegen, daß die Steuereinheit (8) ein Ausgangssignal für den Start des Abzugsbandes (31) der Vereinzelungseinrichtung (2) liefert, wenn die UND-Schaltung (24) ein "High"-Signal abgibt.

17. Anordnung nach einem der Ansprüche 2 bis 16, dadurch gekennzeichnet, daß die Meßeinrichtung (4) eine Zielerkennungseinrichtung (25) enthält,

daß die Zielerkennungseinrichtung (25) bei einer nachfolgenden Verteilanlage (26) das Fach (Zᵢ), in das die Sendung abgestapelt wird, ermittelt,

daß die Verteilanlage (26) Richtungsweichen (R₁, R₂,...Rₙ) enthält und

daß die Steuerung der Richtungsweichen (R₁,R₂,...Rₙ) durch die Zielerkennungseinrichtung (25) erfolgt.

18. Anordnung nach einem der Ansprüche 2 bis 17, dadurch gekennzeichnet, daß die Zielerkennungseinrichtung (25) einen Bar-Code-Leser (28) enthält,

daß die Ausgangssignale des Bar-Code-Lesers (28) die Richtungsweichen (R₁, R₂,...Rₙ) der Verteilanlage (26) steuert.

19. Anordnung nach einem der Ansprüche 2 bis 18, dadurch gekennzeichnet, daß eine Prüf-Meß-Einrichtung (27) vor der nachfolgenden Verteilanlage (26) angeordnet ist,

daß die Prüf-Meß-Einrichtung (27) die Paramter (P) der Sendungen sowie die Istwerte der Abstände aufeinanderfolgender Sendungen ermittelt,

daß die Prüf-Meß-Einrichtung (27) die Information der zu den Sendungen gehörigen Zielfächer (Zᵢ) von der Zielerkennungseinrichtung (25) erhält,

daß die Prüf-Meß-Einrichtung (27) den Istwert des Abstandes aufeinanderfolgender Sendungen mit dem aus den Parametern (P) sich ergebenden Sollwert vergleicht,

daß bei Unterschreitung des Istwertes um einen vorgegebenen Wert gegenüber dem Sollwert die nachfolgende Sendung oder vorauslaufende Sendung in ein Auffangfach (Z_A) durch entsprechende von der Prüf-Meß-Einrichtung (27) gesteuerten Stellung der Weichen geschleust wird.

20. Anordnung nach Anspruch 19, dadurch gekennzeichnet, daß die Prüf-Meß-Einrichtung (27) in gleicher Weise wie die Meßeinrichtung (4) die Parameter (P) der Sendungen ermittelt,

daß die Prüf-Meß-Einrichtung (27) daraus den Sollwert des Abstandes zur nachfolgenden Sendung liefert,

daß die Prüf-Meß-Einrichtung (27) dauernd die Abstände (dᵢ) aufeinanderfolgender Briefe ermittelt,

daß bei Unterschreitung des Sollwertes die Prüf-Meß-Einrichtung (27) ein weiteres Steuersignal (S₀) liefert zur Umstellung der Richtungsweichen (R₁, R₂,...Rₙ), derart, daß die nachfolgende Sendung in das Auffangfach (Z_A) geschleust wird.

**Claims**

1. Method for the control of the take-off operation in a singling equipment for the successive feed of consignments of different length in particular letter consignments, postcards or similar, in a conveyor with a measuring equipment, which is arranged along the conveying path downstream of the singling equipment and the signals of which are fed to a control equipment for the control of the take-off, wherein the spacing of the rear edge of the consignment already taken off from the front edge of the next following consignment to be taken off is ascertained by the measuring equipment and the control equipment delivers a control signal for the take-off of the consignment to be taken off to the singling equipment as soon as this spacing has reached a preset target value, characterised thereby, that the measuring equipment measures the parameters of the consignment already taken off, which are relevant to the ascertaining of a minimum possible spacing, such as for example length, thickness, height, weight, stiffness and surface roughness, that the measured values of the parameters are fed to a signal-evaluating equipment which allocates an output signal to these measured values, which represents a measure of the target value of the spacing between the rear edge of the consignment taken off and the front edge of the consignment to be taken off, and that this output signal is fed to the control equipment.

2. Arrangement for the performance of the method according to claim 1 for the control of the take-off operation in a singling equipment (2) for the successive feed of consignments of different length, in particular letter consignments, postcards or similar, in a conveyor with a measuring equipment (4), which is arranged along the conveying path downstream of the singling equipment (2) and the signals of which are fed to a control unit (8) for the control of the take-off, wherein the spacing of the rear edge of the consignment (5) already taken off from the front edge of the next following consignment (6) to be taken off is ascertained by the measuring equipment (4) and the control unit (8) delivers a control signal (S) for the take-off of the consignment (6) to be taken off to the singling equipment (2) as soon as this spacing has reached a preset target value, characterised thereby, that means are provided in the measuring equipment (4) for measuring the parameters of the consignment already taken off, which are relevant to the ascertaining of a minimum possible spacing, such as for example length, thickness, height, weight, stiffness and surface roughness, that a signal-preparing equipment (7) is provided, to which the measured values of the parameters are fed, and that means are provided in the signal-preparing equipment in order to allocate an output signal to these measured values, which represents a measure of the target value of the spacing between the rear edge of the consignment taken off and the front edge of the consignment to be taken off.

3. Arrangement according to claim 2, characterised thereby, that the measuring equipment (4) ascertains the consignment parameters of length (L), height (H) and thickness (D) of the consignments last taken off.

4. Arrangement according to one of the claims 2 and 3, characterised thereby, that the measuring equipment (4) contains a light barrier (9) in the detection range of the continuously driven conveying path (3) and that the measuring equipment (4) ascertains the length (L) of the consignment taken off from the time duration of the darkening of the light barrier (9) and the transport speed (v) of the conveying path (3).

5. Arrangement according to one of the claims 2 to 4, characterised thereby, that the measuring equipment (4) contains several light barriers ($L_1$ to $L_n$) arranged one vertically above the other for ascertaining the vertical height (H) of the consignment taken off and that the height (H) of the consignment is yielded by the number of darkened light barriers ($L_1$ to $L_n$).

6. Arrangement according to one of the claims 2 to 5, characterised thereby, that the measuring equipment (4) contains a resiliently borne plunger equipment (10) for ascertaining the thickness (D) of the consignment (5) taken off, that the plunger equipment (10) acts on the conveyor belts (12, 13) and that the spacing of the conveyor belts (12, 13), which is dependent on the thickness (D) of the consignment just passing through, gives the plunger setting.

7. Arrangement according to one of the claims 2 to 6, characterised thereby, that the measurement of the spacing (d) between the consignments takes place by means of the light barrier (9) and that the measuring equipment (4) ascertains the spacing (d) between the consignment taken off and that not yet taken off from the tine duration of the brightening of the light barrier (9) and the transport speed (v).

8. Arrangement according to one of the claims 2 to 7, characterised thereby, that the signal-preparing circuit (7, 7L) contains a decoding equipment (14) and that the decoding equipment supplies an appropriate output signal (A), as a measure of the spacing to be chosen from the next following consignment, in dependence on the input signals present at the input in correspondence with the ascertained consignment parameters.

9. Arrangement according to claim 8, characterised thereby, that the signal-preparing equipment (7) for the length measurement contains a measurement pulse generator (15), the output of which is connected with the one input ($E_1$) of an AND-member (16), that the other input ($E_2$) of the AND-member is connected with the output of the light barrier (9), that the start for the length measurement begins when the front edge of the consignment (5) enters into the light barrier range, that a forward counter (17) is set to zero by the bright-to-dark edge, that the forward counter (17) counts the number of the pulses of the measurement pulse generator (15) within the time interval of the dark setting of the light barrier (9) and that the decoding equipment (14) supplies an output value to be chosen for the spacing to be chosen from the next following consignment (6) in dependence on the input value (L) supplied by the forward counter (17).

10. Arrangement according to one of the claims 8 and 9, characterised thereby, that a further AND-member (18) produces a gap pulse for spacing measurement for a reverse counter (19), that the measurement pulse generator (15) supplies the gap pulse by way of the further AND-member (18) when the rear edge of the consignment leaves the range of the light barrier (9), that the decoding equipment (14) by its output signal performs the presetting of the reverse counter (19) and that the instantaneous output value of the reverse counter (19) corresponds to the deviation of the spacing (d) of two consignments (5, 6) from the target value.

11. Arrangement according to claim 9, characterised thereby, that the measuring equipment (4) contains the light barriers ($L_1$ to $L_n$) for the height measurement of the consignment (5), that each individual light barrier ($L_i$) is connected with the data inputs of another decoding equipment (20) lying within the signal-preparing equipment (7, 7H) and that the other decoding equipment (20) supplies an output value, which is dependent on the height (H) of the consignment and to be chosen for the spacing from the next following consignment in dependence on the number of the light barriers ($L_1$ to $L_n$) switched to "dark".

12. Arrangement according to claim 11, characterised thereby that the measuring pulse generator (15) is connected by way of the further AND-member (18) with the pulse input of a further reverse counter (21), that the other decoding equipment (20) by its output presets the further reverse counter (21) and that the instantaneous output value of the further reverse counter (21) corresponds to the deviation of the spacing (d) of two successive consignments (5, 6) from the target value.

13. Arrangement according to one of the claims 6 to 12, characterised thereby, that the measuring equipment (4) for the thickness measurement contains a further light barrier chain ($S_1$ to $S_n$), which detects the setting of the plunger (11), that the thickness (D) of the consignment (S) instantaneously situated in the conveying path (3) is yielded by the position of the light barrier ($S_i$) switched to "dark", that the thickness value (D) is fed to a third decoding equipment (22) within the signal-preparing equipment (7, 70), that the third decoding equipment (22) issues a spacing value, which is to be chosen in dependence on the consignment thickness (D), for the next following assignment (6), that a third reverse counter (23) is preset by this value and that the measurement pulse generator (15) is connected by way of the further AND-member (18) with the pulse input of the third reverse counter (23).

14. Arrangement according to one of the claims 10 to 13, characterised thereby, that the control unit (8; 8L, 8H, 8D) supplies a control signal (S) when one of the reverse counters (19, 21, 23) supplies a preset output value.

15. Arrangement according to claim 14, characterised thereby, that the control unit (8) supplies a control signal (S) when all the reverse counters (19, 21, 23) supply preset output values.

16. Arrangement according to one of the claims 2 to 15, characterised thereby, that the control unit (8) contains a number of comparators ($K_1$ to $K_N$), which corresponds with the number of consignment parameters to be ascertained, that the outputs of the comparators are connected with the corresponding inputs of a further AND-circuit (24), that the comparators supply an output signal "HIGH" when all the outputs of the reverse counters lie at "LOW" and that the control unit (8) supplies an output signal for the start of the take-off belt (31) of the singling equipment (2) when the AND-circuit (24) delivers a "HIGH" signal.

17. Arrangement according to one of the claims 2 to 16, characterised thereby, that the measuring equipment (4) contains a target recognition equipment (25), that the target recognition equipment (25) ascertains the compartment ($Z_i$), into which the consignment is stacked, in a downstream distributing system (26), that the distributing system (26) contains directing shunting switches ($R_1$ to $R_n$) and that the control of the directing shunting switches ($R_1$ to $R_n$) takes place through the target recognition equipment (25).

18. Arrangement according to one of the claims 2 to 17, characterised thereby, that the target recognition equipment (25) contains a bar code reader (28) and that the output signals of the bar code reader (28) control the directing shunting switches ($R_1$ to $R_n$) of the distributing system (26).

19. Arrangement according to one of the claims 2 to 18, characterised thereby, that a test/measuring equipment (27) is arranged in front of the downstream distributing system (26), that the test/measuring equipment (27) ascertains the parameters (P) of the consignments as well as the actual values of the spacings between successive consignments, that the test/measuring equipment (27) receives the information on the target compartments ($Z_i$) belonging to the consignments from the target recognition equipment (25), that the test/measuring equipment (27) compares the actual value of the spacing between successive consignments with the target value resulting from the parameters (P) and that, on the actual value being fallen below by a preset value relative to the target value, the succeeding consignment or the preceding consignment is shunted into a collecting compartment ($Z_A$) through appropriate setting, controlled by the test/measuring equipment (27), of the shunting switches.

20. Arrangement according to claim 19, characterised thereby, that the test/measuring equipment (27) ascertains the parameters (P) of the consignments in the same manner as the measuring equipment (4), that the test/measuring equipment (27) therefrom supplies the target value of the spacing from the succeeding consignment, that the test/measuring equipment (27) continuously ascertains the spacings ($d_i$) of successive letters and that, on the target value being fallen below, the test/measuring equipment (27) supplies a further control signal ($S_o$) for the resetting of the directing shunting switches ($R_1$ to $R_n$) in such a manner that the succeeding consignment is shunted into the collecting compartment ($Z_A$).

**Revendications**

1. Procédé pour la commande de l'opération d'extraction dans un dispositif de déliassage en vue de l'acheminement successif d'envois de longueur différente, notamment de lettres, de cartes postales ou similaires, vers un convoyeur avec un dispositif de mesure monté en aval du dispositif de déliassage, le long de la voie de transport des envois, dont les signaux sont envoyés à un dispositif de commande pour la commande de l'extraction, la distance séparant le bord arrière de l'envoi déjà extrait du bord avant de l'envoi suivant à extraire, étant déterminée par le dispositif de mesure et le dispositif de commande délivrant un signal de commande en vue de l'extraction de l'envoi à extraire, au dispositif de déliassage, dès que cette distance a atteint une valeur de consigne donnée, caractérisé en ce que le dispositif de mesure, mesure les paramètres de l'envoi déjà extrait, importants pour déterminer une distance possible minimale, tels que longueur, épaisseur, hauteur, poids, rigidité, rugosité de surface, en ce que les valeurs mesurées des paramètres sont envoyées à un dispositif d'exploitation de signaux qui associe à ces valeurs mesurées un signal de sortie qui représente une grandeur pour la valeur de consigne de la distance séparant le bord arrière de l'envoi extrait et le bord avant de l'envoi à extraire et en ce que ce signal de sortie est envoyé au dispositif de commande.

2. Dispositif pour la mise en oeuvre du procédé selon la revendication 1, en vue de commander l'opération d'extraction dans un dispositif de déliassage (2) en vue de l'acheminement successif d'envois de longueur différente, notamment de lettres, de cartes postales ou similaires, vers un convoyeur avec un dispositif de mesure (4) monté en aval du dispositif de déliassage (2), le long de la voie de transport de l'envoi, dont les signaux sont envoyés à une unité de commande (8) pour commander l'extraction, la distance séparant le bord arrière de l'envoi (5) déjà extrait du bord avant de l'envoi suivant (6) à extraire, étant déterminée par le dispositif de mesure (4) et l'unité de commande (8) délivrant un signal de commande (S) en vue de l'extraction de l'envoi (6) à extraire, au dispositif de déliassage (2), dès que cette distance a atteint une valeur de consigne donnée, caractérisé en ce qu'il est prévu dans le dispositif de mesure (4) des moyens destinés à mesurer les paramètres de l'envoi déjà extrait, importants pour déterminer une distance possible minimale, tels que longueur, épaisseur, hauteur, poids, rigidité, rugosité de surface, en ce qu' il est prévu un dispositif de préparation des signaux (7) auquel sont envoyées les valeurs mesurées des paramètres et en ce qu'il est prévu des moyens dans le dispositif de préparation des signaux (7) afin d'affecter aux valeurs mesurées des paramètres un signal de sortie qui représente une grandeur pour la valeur de consigne de la distance séparant le bord arrière de l'envoi extrait et le bord avant de l'envoi à extraire.

3. Dispositif selon la revendication 2, caractérisé en ce que le dispositif de mesure (4) détermine les paramètres d'envoi longueur (L), hauteur (H) et épaisseur (D) des envois extraits en dernier.

4. Dispositif selon l'une des revendications 2 à 3, caractérisé en ce que le dispositif de mesure (4) contient une cellule photoélectrique (9) dans la région de saisie de la voie de transport (3) entraînée en permanence, en ce que le dispositif de mesure (4) détermine la longueur (L) de l'envoi extrait, à partir de la durée du contrôle d'obscurité d la cellule photoélectrique (9) et de la vitesse de transport (v) de la voie de transport (3).

5. Dispositif selon l'une des revendications 2 à 4, caractérisé en ce que le dispositif de mesure (4) contient dans la verticale, plusieurs autres cellules photoélectriques ($L_1...L_n$) superposées verticalement, pour déterminer la hauteur (H) de l'envoi extrait, en ce que du nombre des cellules photoélectriques ($L_1...L_n$) obscurcies, on obtient la hauteur (H) de l'envoi.

6. Dispositif selon l'une des revendications 2 à 5, caractérisé en ce que le dispositif de mesure (4) contient un dispositif à poussoir (10) monté élastiquement, pour déterminer l'épaisseur (D) de l'envoi (5) extrait, en ce que le dispositif à poussoir (10) agit sur les bandes de transport (12, 13), en ce que l'écartement des bandes de transport (12, 13) dépendant de l'épaisseur (D) de l'envoi en cours de passage, indique la position du poussoir.

7. Dispositif selon l'une des revendications 2 à 6, caractérisé en ce que la mesure de la distance (d) séparant les envois s'effectue au moyen de la cellule photoélectrique (9), en ce que le dispositif de mesure (4) détermine la distance (d) séparant l'envoi extrait et l'envoi non encore extrait, à partir de la durée du contrôle de clarté de la cellule photoélectrique (9) et de la vitesse de transport (v).

8. Dispositif selon l'une des revendications 2 à 7, caractérisé en ce que le circuit de préparation de signaux (7, 7L) contient un dispositif de décodage (14), en ce que le dispositif de décodage fournit un signal de sortie (A) servant de grandeur pour la distance à choisir par rapport à l'envoi suivant, en fonction des signaux d'entrée s'appliquant côté entrée, suivant les paramètres d'envoi déterminés.

9. Dispositif selon la revendication 8, caractérisé en ce que le dispositif de préparation de signaux (7) contient un générateur d'impulsions de mesure (15) pour la mesure de longueur, dont la sortie est reliée à l'entrée (E1) d'un opérateur ET (16), en ce que l'autre entrée (E2) de l'opérateur ET est reliée à la sortie de la cellule photoélectrique (9), en ce que le lancement de la mesure de longueur commence lorsque le bord avant de l'envoi (5) entre dans la zone de la cellule photoélectrique, en ce qu'un compteur incrémenteur (17) est remis à zéro par le flanc clair/sombre, en ce que le compteur incrémenteur (17) compte le nombre d'impulsions du générateur d'impulsions de mesure (15) à l'intérieur de l'intervalle de temps de la position sombre de la cellule photoélectrique (9), en ce que le dispositif de décodage fournit une valeur de sortie à sélectionner pour la distance par rapport à l'envoi (6) suivant, en fonction de la valeur d'entrée (L) fournie par le compteur incrémenteur (17).

10. Dispositif selon l'une des revendications 8 à 9, caractérisé en ce qu'un autre opérateur ET (18) produit un rythme d'espacement en vue de la mesure de la distance, pour un compteur décrémenteur (19), en ce que le générateur d'impulsions de mesure (15) fournit le rythme d'espacement par l'intermédiaire de l'autre opérateur ET (18) lorsque le bord arrière de l'envoi quitte la zone de la cellule photoélectrique (9), en ce que le dispositif de décodage (14) avec son signal de sortie effectue le préréglage du compteur décrémenteur (19), en ce que la valeur de sortie momentanée du compteur décrémenteur (19) correspond à l'écart de la distance (d) de deux envois (5,6) par rapport à la valeur de consigne.

11. Dispositif selon la revendication 9, caractérisé en ce que le dispositif de mesure (4) contient les cellules photoélectriques ($L_1...L_n$) pour la hauteur de mesure de l'envoi (5), en ce que chaque cellule photoélectrique (Li) est reliée aux entrées d'un autre dispositif de décodage (20) se trouvant à l'intérieur du dispositif de préparation de signaux (7, 7H), en ce que l'autre dispositif de décodage (20) fournit une valeur de sortie pour la distance par rapport à l'envoi suivant, à sélectionner en fonction de la hauteur (H) de l'envoi, suivant le nombre (Z) de cellules photoélectriques ($L_1... L_n$) "sombres".

12. Dispositif selon la revendication 11, caractérisé en ce que le générateur d'impulsions de mesure (15) est relié à l'entrée de cadence d'un autre compteur décrémenteur (21), par l'intermédiaire de l'autre opérateur ET (18), en ce que l'autre dispositif de décodage (20) avec sa valeur de sortie pré-règle l'autre compteur décrémenteur (21), en ce que la valeur de sortie momentanée de l'autre compteur décrémenteur (21) correspond à l'écart de la distance (d) de deux envois successifs par rapport à la valeur de consigne.

13. Dispositif selon l'une des revendications 6 à 12, caractérisé en ce que le dispositif de mesure (4) contient une autre chaîne de cellules photoélectriques ($S_1....S_n$), pour la mesure d'épaisseur, laquelle chaîne saisit la position du poussoir (11), en ce qu'à partir de la position des cellules photoélectriques (Si) "sombres", on obtient l'épaisseur (D) de l'envoi (5) se trouvant momentanément dans le parcours de transport (3), en ce que la valeur d'épaisseur (D) est envoyée à un troisième dispositif de décodage (22) à l'intérieur du dispositif de préparation de signaux (7, 7D), en ce que le troisième dispositif de décodage (22) délivre une valeur de distance par rapport à l'envoi (6) suivant, à sélectionner en fonction de l'épaisseur de l'envoi (D), en ce qu'un troisième compteur décrémenteur (23) est préréglé avec cette valeur, en ce que le générateur d'impulsions de mesure (15) est relié à l'entrée de cadence du troisième compteur décrémenteur (23), par l'intermédiaire de l'autre opérateur ET (18).

14. Dispositif selon l'une des revendications 10 à 13, caractérisé en ce que l'unité de commande (8; 8L, 8H, 8D) fournit un signal de commande (S) lorsque l'un des compteurs décrémenteurs (19, 21, 23) fournit une valeur de sortie donnée.

15. Dispositif selon la revendication 14, caractérisé en ce que l'unité de commande (8) fournit un signal de commande (S) lorsque tous les compteurs décrémenteurs (19, 21, 23) fournissent des valeurs de sortie données.

16. Dispositif selon l'une des revendications 2 à 15, caractérisé en ce que l'unité de commande (8) contient un nombre de comparateurs ($K_1$, $K_2,....K_N$) correspondant à un nombre à déterminer de paramètres d'envoi, en ce que les sorties des comparateurs sont reliées aux entrées correspondantes d'un autre circuit ET (24), en ce que les comparateurs fournissent un signal de sortie "high" lorsque les sorties des compteurs décrémenteurs se situent toutes sur "low", en ce que l'unité de commande (8) délivre un signal de sortie pour le démarrage de la bande d'extraction (31) du dispositif de déliassage (2) lorsque le circuit ET (24) délivre un signal "high".

17. Dispositif selon l'une des revendications 2 à 16, caractérisé en ce que le dispositif de mesure (4) contient un dispositif de détection de destination (25), en ce que le dispositif de détection de destination (25) détermine dans une installation de distribution (26) suivante, le casier (Zi) dans lequel doit être empilé l'envoi, en ce que l'installation de distribution (26) contient des dispositifs d'aiguillage ($R_1$, $R_2,...R_n$) et en ce que la commande des dispositifs d'aiguillage ($R_1,...R_n$) est assurée par le dispositif de détection de destination (25).

18. Dispositif selon l'une des revendications 2 à 17, caractérisé en ce que le dispositif de détection de destination (25) contient un lecteur de code à barres (28), en ce que les signaux de sortie du lecteur de code à barres (28) commande les dispositifs d'aiguillage ($R_1$, $R_2,...R_n$) de l'installation de distribution (26).

19. Dispositif selon l'une des revendications 2 à 18, caractérisé en ce qu'un dispositif de mesure de vérification (27) est placé devant l'installation de distribution (26) suivante, en ce que le dispositif de mesure de vérification (27) détermine les paramètres (P) des envois ainsi que les valeurs réelles des distances séparant des envois successifs, en ce que le dispositif de mesure de vérification (27) reçoit l'information des casiers de destination (Zi) appartenant aux envois, du dispositif de détection de destination (25), en ce que le dispositif de mesure de vérification (27) compare la valeur réelle de la distance séparant des envois successifs avec la valeur de consigne résultant des paramètres (P), en ce que dans le cas où la valeur réelle est inférieure d'une valeur donnée à la valeur de consigne, l'envoi suivant ou l'envoi précédent est retenu dans un casier de collecte (ZA) par une position appropriée des dispositifs d'aiguillage commandée par le dispositif de mesure de vérification (27).

20. Dispositif selon la revendication 19, caractérisé en ce que le dispositif de mesure de vérification (27) détermine les paramètres (P) des envois, de la même manière que le dispositif de mesure (4), en ce que le dispositif de mesure de vérification (27) fournit à partir de ceux-ci la valeur de consigne de la distance par rapport à l'envoi suivant, en ce que le dispositif de mesure de vérification (27) détermine en permanence les distances (di) séparant des lettres successives, en ce que dans le cas où la valeur de consigne n'est pas atteinte, le dispositif de mesure de vérification (27) fournit un autre signal de commande (So) en vue du changement de position des dispositifs d'aiguillage ($R_1$, $R_2$,...$R_n$), de telle sorte que l'envoi suivant soit retenu dans le casier de collecte ($Z_A$).

FIG. 1

FIG. 2

FIG. 3A

FIG. 3B

FIG. 3C

FIG. 4

FIG. 5

FIG. 6A

FIG. 6B